(19) Europäisches Patentamt
European Patent Office
Office européen des brevets

(11) EP 2 293 475 A1

(12) # EUROPEAN PATENT APPLICATION
published in accordance with Art. 153(4) EPC

(43) Date of publication:
**09.03.2011 Bulletin 2011/10**

(21) Application number: **09770066.0**

(22) Date of filing: **17.06.2009**

(51) Int Cl.:
***H04J 99/00*** *(2009.01)* ***H04B 7/04*** *(2006.01)*
***H04J 11/00*** *(2006.01)* ***H04W 16/28*** *(2009.01)*

(86) International application number:
**PCT/JP2009/061032**

(87) International publication number:
**WO 2009/157356 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.06.2008 JP 2008166521**

(71) Applicant: **Sumitomo Electric Industries, Ltd.**
**Chuo-ku**
**Osaka-shi**
**Osaka 541-0041 (JP)**

(72) Inventor: **YAMAMOTO Takashi**
**Osaka-shi**
**Osaka 554-0024 (JP)**

(74) Representative: **Cross, Rupert Edward Blount et al**
**Boult Wade Tennant**
**Verulam Gardens**
**70 Gray's Inn Road**
**London WC1X 8BT (GB)**

(54) **RADIO COMMUNICATION DEVICE AND SIGNAL TRANSMISSION METHOD IN MIMO RADIO COMMUNICATION**

(57) Channel characteristics in MIMO channels are averaged. A radio communication device 2 that performs communication using a plurality of frequencies includes a plurality of antenna elements 2a and 2b, and a transmitted beam forming unit 23 that performs a transmitted beam forming process on a transmitted signal using a transmitted beam matrix U. The transmitted beam matrix is constructed by a function matrix U(jω) of the frequencies ω, and spatial channel characteristics, viewed from the receiving side varied depending on frequencies.

*FIG. 1*

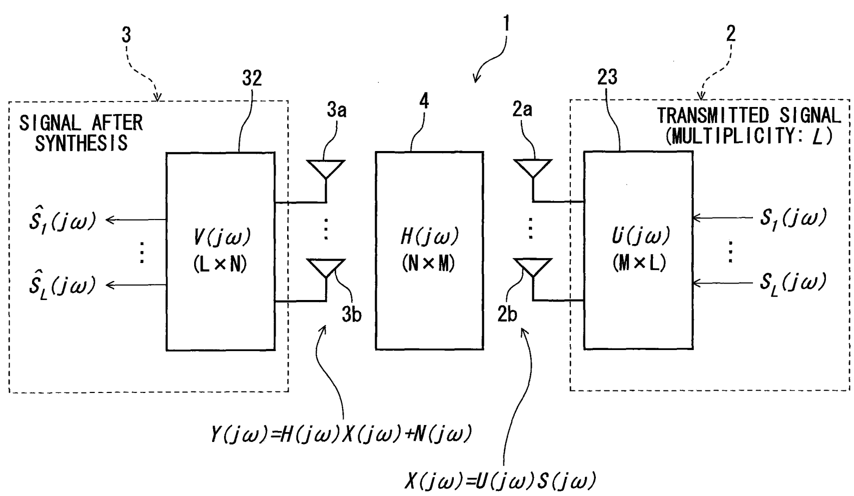




Printed by Jouve, 75001 PARIS (FR)

## Description

### TECHNICAL FIELD

The present invention relates to a radio communication device and a signal transmission method in a MIMO radio communication.

### BACKGROUND ART

Recently, as a transmission rate improvement technology in a radio communication system, MIMO (Multiple Input Multiple Output) communication, which includes a plurality of transmission antennas arranged in a transmitting side of radio communication device and is capable of transmitting different signals even on the same frequency, has been studied (see NPL 1).

### PRIOR ART DOCUMENT

Non Patent Literature

NPL 1: Hattori Takeshi and Fujioka Masanobu, "High-speed IP wireless" in Radio and Broadband Textbook, Revision, Impress R&D Ltd., June 21, 2006, p193

### SUMMARY OF INVENTION

### PROBLEMS THAT THE INVENTION IS TO SOLVE

If there is a difference between transmission path characteristics (spatial channel characteristics) that correspond to a plurality of signals transmitted from a plurality of antenna elements in MIMO communication, the overall demodulation characteristics may become worse due to a demodulation error of signals that pass through transmission paths having inferior characteristics.

Here, as illustrated in Fig. 12, assuming that transmitted sub-streams of a transmitted signal having a spatial multiplicity L are $S_1$ to $S_L$, respectively, the number of transmission antenna elements is M, signals (sub-streams) transmitted from M transmission antenna elements are $X_1$ to $X_M$, respectively, a transmission beam matrix that forms a transmitted beam is U (a matrix of M×L), the number of reception antenna elements is N, signals received through N reception antenna elements are $y_1$ to $y_N$, respectively, the transmission path characteristic is H (a matrix of N×M), and a reception weight matrix that forms the received beams is V (a matrix of L×M), respectively, a transmitted signal vector X that is transmitted from the transmission antenna element is expressed by Equation (1).

$$X = US \qquad \text{... (1)},$$

where S is S = $[s_1 \ldots s_L]$, and X is X = $[x_1 \ldots x_M]$.

Also, a received signal vector Y in the reception antenna element is expressed by Equation (2).

$$Y = HX + N \qquad \text{... (2)},$$

where N is a noise vector.

Accordingly, the signal $\hat{S}$ after synthesis is expressed by Equation (3).

$$\hat{S} = VY = VHUS + VN \qquad \text{... (3)}$$

At this time, if a weight ZF is employed as the reception weight, the received weight matrix V becomes an inverse matrix of the channel characteristic HU as seen from the receiving side. That is, the received weight V and the signal $\hat{S}$ after synthesis are expressed by Equation (4).

$$V = (HU)^{-1}$$

$$\hat{S} = S + (HU)^{-1}N \qquad \text{... (4)}$$

Here, assuming that the multiplicity L of the transmitted signal is L = 2, the number M of transmission antenna elements is M = 2, and the number N of the reception antenna elements is N = 2,

The multiplexed transmitted signal vector S, the transmission path characteristic H, and the transmitted beam matrix U are expressed by Equation (5).

$$S = \begin{pmatrix} s_1 \\ s_2 \end{pmatrix}$$

$$H = \begin{pmatrix} 1 & 0 \\ 0 & \frac{1}{2} \end{pmatrix}$$

$$U = \begin{pmatrix} 1 & 0 \\ 0 & 1 \end{pmatrix} \qquad \text{.... (5)}$$

Accordingly, the signal $\hat{S}$ after synthesis (the estimated value of the transmitted signal S) is expressed by Equation (6).

$$\hat{S} = \begin{pmatrix} \hat{s}_1 \\ \hat{s}_2 \end{pmatrix} = \begin{pmatrix} s_1 \\ s_2 \end{pmatrix} + \begin{pmatrix} 1 & 0 \\ 0 & 2 \end{pmatrix} \begin{pmatrix} n_1 \\ n_2 \end{pmatrix} \qquad \text{....(6)}$$

Here, if Equation (7) is given as follows,

$$E[|s_1|^2] = E[|s_2|^2]$$

$$E[|n_1|^2] = E[|n_2|^2] \qquad \text{... (7)}$$

Equation (8) is obtained.

$$\frac{E[|s_2|^2]}{E[|\hat{s}_2 - s_2|^2]} = \frac{E[|s_1|^2]}{4E[|\hat{s}_1 - s_1|^2]} \quad \ldots (8)$$

In this example, the SN ratio of the transmitted sub-stream $s_2$ becomes 1/4 times the SN ratio of the transmitted sub-stream $s_1$.

As is clear from the above-described example, noise from the transmission path does not exert an influence equally on the transmitted sub-stream $s_1$ and the transmitted sub-stream $s_2$, and noise from large power noise exerts an influence on the transmitted sub-stream $s_2$ rather than the transmitted sub-stream $s_1$. That is, the estimation error of the transmitted sub-stream $s_2$ becomes larger than the estimation error of the transmitted sub-stream $s_1$, and thus a difference in characteristics between the spatial channels occurs.

In general, encoding and multileveling (digital modulation) of the transmitted data are performed by a data rate that is reliability decodable on the receiving side.
Accordingly, if noise is high even in the MIMO channel, the encoding and the multileveling are performed so as to make the data rate relatively low. Meanwhile, if the noise is low, the encoding and the multileveling are performed so as to make the data rate relatively high.

However, as described above, in the MIMO channel, a difference in characteristics occurs between the spatial channels that correspond to the transmitted sub-streams $S_1$ to $S_L$.
If the transmitting side can accurately grasp the characteristics of the respective channels even though there is a difference in characteristics between the channels, it is possible to set the data rates of the respective channels depending on the characteristics of the respective channels.
However, except for a special case where both the transmitting side and the receiving side come to a standstill, it is typically difficult to accurately determine the channel characteristics on the transmitting side.

In the case where the transmitting side is unable to acquire the characteristics of the respective channels, it is necessary to transmit the signal at low data rate for the respective channels so that the receiving side can reliably demodulate and decode the received signal even in the worst channel characteristic state.
That is, as in the above example, since the spatial channel characteristics that correspond to the transmitted sub-stream $s_2$ are bad even though the spatial channel characteristics that correspond to the transmitted sub-stream $S_1$ are good, it is necessary to lower the data rate even with respect to the transmitted sub-stream $S_1$ because of the bad spatial channel characteristics.

Accordingly, it is an object of the present invention to solve the above-described problems by allowing the characteristics of the transmitted beams to be varied depending on the frequencies.

## MEANS FOR SOLVING THE PROBLEMS

According to the present invention, there is provided a radio communication device that performs communication using a plurality of frequencies. The apparatus includes: a plurality of antenna elements; and a processor that performs a transmitted beam forming process on a transmitted signal using a transmitted beam matrix. The transmitted beam matrix is constructed by a function matrix of the frequencies.
According to the invention, since the transmitted beam matrix is a function of frequency, characteristics of the transmitted beams are varied depending on the frequencies of the signals. Accordingly, the spatial channel characteristics, viewed from the receiving side, are varied depending on the frequencies, and thus the deterioration of the characteristics of a specified channel can be suppressed.

It is advantageous that the processor performs the transmitted beam forming process using the transmitted beam matrix on the transmitted signal in a time domain.
Also, it is advantageous that the processor transforms the transmitted signal in a frequency domain into the transmitted signal in the time domain, and performs the transmitted beam forming process using the transmitted beam matrix on the transmitted signal transformed into the time domain.
It is advantageous that the processor performs the transmitted beam forming process using the transmitted beam matrix, by using a delay process in the time domain and an addition process in the time domain.
In this case, the transmitted beam formation can be easily performed.

It is advantageous that the transmitted beam matrix is constructed such that weights of powers and phases of respective transmitted sub-streams in the respective antenna elements are varied depending on frequencies.
Also, it is advantageous that the processor performs the transmitted beam forming process using the transmitted beam matrix, when it is determined that the reliability of estimated values of transmission path characteristics is low.

When a spatial multiplicity of the transmitted signal is L, the number of antenna elements is M, and an angular frequency is ω, the transmitted beam matrix U(jω) is given by the following Equation (9),

$$U(j\omega) = \begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \quad (M \times L) \qquad \text{....(9)}$$

When transmitted beam vectors $u_1(j\omega)$ to $u_L(j\omega)$ correspond to respective transmitted sub-streams $s_1(j\omega)$ to $s_L(j\omega)$ in the transmitted signal having the multiplicity L, the transmitted beam matrix U(jω) is given by the following Equation (10),

$$U(j\omega) = [u_l(j\omega) \ldots u_L(j\omega)] \qquad \text{... (10)}$$

The transmitted beam matrix U(jω) satisfies the following Equation (11) in any frequency ω,

$$U_l(j\omega)^H u_l(j\omega) = \text{constant } (l = 1, \ldots, L) \qquad \text{... (11),}$$

where the superscript H indicates complex conjugate transpose.

In this case, it is possible to equally divide the transmitted power for the transmitted signal.

When a spatial multiplicity of the transmitted signal is L, the number of antenna elements is M, and an angular frequency is ω, the transmitted beam matrix U(jω) is given by Equation (12),

$$U(j\omega) = \begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \quad (M \times L) \qquad \text{....(12)}$$

When transmitted beam vectors $u_1(j\omega)$ to $u_L(j\omega)$ correspond to respective transmitted sub-streams $s_1(j\omega)$ to $s_L(j\omega)$ in the transmitted signal having the multiplicity L', the transmitted beam matrix U(jω) is given by Equation (13),

$$U(j\omega) = [u_l(j\omega) \ldots u_L(j\omega)] \qquad \text{... (13)}$$

The transmitted beam matrix U(jω) satisfies the following Equation (14) in any frequency ω,

$$U_l(j\omega)^H u_{l'}(j\omega) = 0 \ (l = (1, \ldots, L), l' = (1, \ldots, L), l \neq l') \qquad \text{... (14)}$$

where the superscript H indicates complex conjugate transpose.

In this case, the interference between the respective transmitted signals can be prevented.

When a spatial multiplicity of the transmitted signal is L, the number of antenna elements is M, and an angular frequency is ω, in the case where the transmitted beam matrix U(jω) is given by Equation (15),

$$U(j\omega) = \begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \ (M \times L) \qquad \text{... (15)}$$

wherein using weight vectors $u'_1(j\omega)$ to $u'_M(j\omega)$ of respective transmitted sub-streams $x_1(j\omega)$ to $s_M(j\omega)$ in MIMO antenna elements, the transmitted beam matrix U(jω) is given by Equation (16),

$$U(j\omega) = \begin{bmatrix} u'_1(j\omega) \\ \vdots \\ u'_M(j\omega) \end{bmatrix} \qquad \text{... (16)}$$

wherein the transmitted beam matrix U(jω) satisfies the following Equation (17) in any frequency ω,

$$U'_m(j\omega)^H u'_m(j\omega) = \text{constant } (m = 1, \ldots, M) \qquad \text{... (17)}$$

where the superscript H indicates complex conjugate transpose.

In this case, it is possible to make the power of the signals transmitted from the respective antenna elements constant.

It is advantageous that the transmitted beam matrix is variable depending on time. Also, it is advantageous that the processor transmits a pilot signal using the transmitted beam matrix.

According to another aspect of the present invention, there is provided a signal transmission method in a radio communication using a plurality of frequencies. The method includes: performing a transmitted beam formation such that transmitted beams are varied depending on frequencies, and spatial channel characteristics, viewed from a signal receiving side, are varied depending on frequencies.

## ADVANTAGE OF THE INVENTION

According to the present invention, the spatial channel characteristics seen from the receiving side are varied depending on the frequencies, and thus deterioration of the characteristics of a specified channel can be suppressed.

## BRIEF DESCRIPTION OF DRAWINGS

Fig. 1 is a diagram illustrating the whole of a MIMO radio communication system.
Fig. 2 is a diagram illustrating a sub-carrier arrangement in OFDM.
Fig. 3 is a block diagram illustrating the transmission function of a radio communication device.
Fig. 4 is a block diagram of a transmitted beam forming unit.

Fig. 5 is a block diagram of a transmitted beam forming unit.
Fig. 6 is a block diagram of a transmitted beam forming unit.
Figs. 7A to 7C are diagrams illustrating a method of delaying data symbols; Fig. 7A shows a data symbol of delay 0; Fig. 7B shows a data symbol of delay T; and Fig. 7C shows a data symbol of a circulated delay T.
Fig. 8 is a block diagram of a transmitted beam forming unit that can control a delay amount.
Fig. 9 is a block diagram of a radio communication device according to a second embodiment of the present invention.
Fig. 10 is a flowchart illustrating a reliability determining process.
Fig. 11 is a diagram illustrating the estimated timing of the transmission path characteristics.
Fig. 12 is a diagram illustrating a general MIMO communication system.

## MODE FOR CARRYING OUT THE INVENTION

Hereinafter, preferred embodiments of the present invention will be described with reference to the accompanying drawings.
Fig. 1 illustrates a MIMO radio communication system 1. This MIMO radio communication system 1 includes a transmitting-side radio communication device 2 having a plurality of antenna elements (transmission antenna elements) and a receiving-side radio communication device 3 having a plurality of antenna elements (reception antenna elements).
The MIMO radio communication system 1 is configured to perform communication by OFDM (Orthogonal Frequency Division Multiplexing) (OFDM-MIMO radio communication system).
The OFDM is to arrange a plurality of carriers (sub-carriers) on a frequency axis and to overlap a part of the plurality of carriers to improve the frequency use efficiency. That is, in the system 1, communications are performed on a plurality of frequencies.
Fig. 2 is a diagram illustrating a sub-carrier arrangement of OFDM in WiMAX (Worldwide Interoperability for Microwave Access, IEEE 802.16) which is the radio communication standard to which the system 1 can be applied. The OFDM is a kind of frequency multiplexing, which is a communication system that performs transmission of digital information by performing digital modulation such as QAM modulation on the plurality of carriers (sub-carriers) arranged to be orthogonal to the frequency axis.
There are three kinds of OFDM sub-carriers including a data sub-carrier, a pilot sub-carrier, and a null sub-carrier. The data sub-carrier is a sub-carrier for transmitting data or control messages. The pilot sub-carrier is a known signal (pilot signal) on the receiving side and the transmitting side, and is used to estimate the transmission path characteristics on the receiving side.
The null sub-carrier is a sub-carrier on which, in fact, no signal is transmitted, and is composed of a guard sub-band (guard sub-carrier) on a low-frequency range side, a guard sub-band (guard sub-carrier) on a high-frequency range side, and a DC sub-carrier (center frequency sub-carrier).
Fig. 3 illustrates a processor 20 that performs processing for transmission in the radio communication device 2. This processor 20 is provided with a map processor 21, IFFT units 22a and 22b, a transmitted beam forming unit 23, CP units 24a and 24b, and D/A converters 25a and 25b.
The map processor 21 performs map processing on transmitted symbols. Here, the transmitted symbol in Fig. 3 indicates a signal after signal processes, such as interleaving, encoding, multileveling modulation, and the like are performed.
The map processor 21 performs allocation of the transmitted symbols to the respective sub-carriers (data sub-carriers) on the frequency axis in the OFDM. Also, the map processor 21 performs spatial allocation to multiplex (spatial multiplicity: L) the transmitted symbols (transmitted signals).
In this case, the processing of the map processor 21 is performed in the frequency domain.
The multiplexed transmitted symbols are IDFT (Inverse Discrete Fourier Transform)-transformed by the IFFT units 22a and 22b, and thus transformed from frequency domain signals to time domain signals (sub-streams) $s_1$ to $s_L$. The spatial multiplexed transmitted signals which have become the time domain signals are subjected to transmitted beam forming process by the transmitted beam forming unit 23, and transmitted signals (transmitted beams) $x_1, ..., x_M$, the number of which corresponds to the number M of transmitted antenna elements 2a and 2b, are generated. In this case, the details of the transmitted beam forming process will be described later.
CPs (Cyclic Prefixes) are added to the respective transmission signals $x_1$ to $x_M$ by the CP units 24a and 24b. The CP is added to the head of the transmission signal.
Also, the transmission signals $x_1$ to $x_M$ are converted into analog signals by the D/A converters 25a and 25b, and then transmitted from M antenna elements 2a and 2b.
As illustrated in Fig. 1, the signals $x_1, ..., x_M$ transmitted from M antenna elements 2a and 2b are received by N antenna elements 3a and 3b of the receiving-side radio communication device 3 through a transmission path (transmission path characteristic H). A weight processor 32 multiplies the signals $y_1, ..., y_N$ received by N antenna elements 3a and 3b by a reception weight V. Further, the weight processor 32 synthesizes the received signals multiplied by the

weight to obtain a signal after synthesis (the estimated signal of the transmitted signals).

The transmitted beam forming unit 23 obtains the transmitted signals (transmitted beams) $x_1, ..., x_M$, the number of which corresponds to the number M of antenna elements, by multiplying the transmitted signals $s_1, ..., s_L$ having multiplicity L by a transmitted beam matrix (transmitted beam forming matrix) U having a matrix size of M $\times$ L.
In this embodiment, the transmitted beam matrix U is composed of a function matrix U(jω) of frequencies. In this case, although ω denotes an angular frequency and ω=2πf (where, f is a frequency), U is simply referred to as "frequency" hereinafter.

In the OFDM system, sub-carriers of a plurality of frequencies are used, and thus the transmitted signal S of the multiplicity L can be expressed as a function S (jω) of the frequencies ω. That is, $S(j\omega)=(s_1(j\omega) \ldots s_L(j\omega))^T$.
Here, in the same manner, it is assumed that the transmission path characteristic H and the reception weight V are expressed respectively as function matrices H(jω) and V(jω) of the frequencies ω.

Then, the signal after synthesis (the estimated signal of the transmitted signals S) in the receiving side radio communication device 3 is expressed by Equation (18).

Signal after synthesis:

$$\hat{S}(j\omega) = \mathbf{V}(j\omega)\mathbf{H}(j\omega)\mathbf{U}(j\omega)S(j\omega)+\mathbf{V}(j\omega)\mathbf{N}(j\omega) \quad \ldots (18)$$

Where N(jω) is noise.

Here, the transmitted beams (transmitted signals) transmitted from M antenna elements 2a and 2b are U(jω) S(jω). Since U(jω) is a function of frequencies, the transmitted beams are varied depending on the frequencies (sub-carriers), and have different frequency characteristics.
Also, the virtual channel characteristics as seen from the receiving side 3 are H(jω)U(jω). Since U(jω) is a function of frequencies, H(jω)U(jω) has frequency characteristics in the same manner. As a result, even if the actual channel characteristic H(jω) has characteristic difference by the spatial channels, the channel characteristics H(jω)U(jω) observed on the receiving side 3 are varied depending on the frequency (sub-carriers), and are virtually randomized on the frequency axis.

That is, the characteristics are averaged between the spatial channels, and the characteristic differences between the spatial channels are suppressed. As the characteristic differences, a the characteristics of the spatial channel corresponding to any transmitted sub-stream $s_1$ are good while the characteristics of the spatial channel corresponding to another transmitted sub-stream $s_2$ are inferior.

Also, in the case of the weight ZF of which the reception weight V(jω) becomes $(H(j\omega)U(j\omega))^{-1}$, the signal after synthesis (the estimated signal of the transmitted signal S) is expressed by Equation (19).

Signal after synthesis:

$$\hat{S}(j\omega) = S(j\omega) + H(j\omega)U(j\omega)^{-1}N(j\omega) \quad . \quad .. (19)$$

As described above, since the channel characteristics H(jω)U(jω) observed on the receiving side 3 are virtually randomized on the frequency axis, estimated errors of the transmitted signal which are expressed by $(H(j\omega)U(j\omega))^{-1}N(j\omega)$ are averaged in the respective spatial channels. As a result, the characteristics are improved even with respect to the spatial channel having an inferior characteristic, and thus good demodulation characteristics can be obtained.

Here, for example, it is assumed that the characteristic H(jω) of the transmission path and the transmitted beam matrix U(jω) are expressed by Equation (20). Here, the multiplicity L = the number of transmission antenna elements M = the number of reception antenna elements N = 2.

$$H(j\omega) = \begin{pmatrix} 1 & 0 \\ 0 & \frac{1}{2} \end{pmatrix}, \quad U(j\omega) = \begin{pmatrix} 1+e^{-j\omega} & 1-e^{-j\omega} \\ 1-e^{-j\omega} & 1+e^{-j\omega} \end{pmatrix} \quad \ldots (20)$$

In this case, $(H(j\omega)U(j\omega))^{-1}$ is expressed by Equation (21).

$$(H(j\omega)U(j\omega))^{-1} = \begin{pmatrix} 1+e^{j\omega} & 1-e^{j\omega} \\ 1-e^{j\omega} & 1+e^{j\omega} \end{pmatrix} \begin{pmatrix} 1 & 0 \\ 0 & 2 \end{pmatrix} = \begin{pmatrix} 1+e^{j\omega} & 2(1-e^{j\omega}) \\ 1-e^{j\omega} & 2(1+e^{j\omega}) \end{pmatrix} \quad \ldots (21)$$

Here, the term $e^{-J\omega}$ corresponds to a delay element having a delay time = 1 as expressed by Equation (22).
$$s(t) = e^{j\omega t},\ s(t-1) = e^{j\omega(t-1)} = s(t) \times e^{-j\omega} \quad \ldots (22)$$

However, the noises $n_1(j\omega)$ and $n_2(j\omega)$ have no correlation with each other in the transmission path, and if it is assumed that an average power of the noises $n_1(j\omega)$ and $n_2(j\omega)$ is Pn, in the above-described example, the estimated errors of the transmitted sub-streams $s_1(j\omega)$ and the transmitted sub-streams $s_2(j\omega)$ are expressed by Equation (23).
$$E[|\hat{S}_1(j\omega) - s_1(j\omega)|^2] = E[|(1 + e^{j\omega})n_1(j\omega) + 2(1 - e^{j\omega})n_2(j\omega)|^2] = (6 - 2e^{j\omega})P_n$$

$$E[|\hat{S}_2(j\omega) - s_2(j\omega)|^2] = (6 + 2e^{j\omega})P_n \quad \ldots (23)$$

Since the transmitted sub-streams $s_1(j\omega)$ and the transmitted sub-streams $s_2(j\omega)$ are sufficiently broadband signals (corresponding to 1024 sub-carriers), the characteristic difference between the spatial channels are diffused on the frequency axis.
Accordingly, the randomization of the MIMO channels is achieved, and thus it is possible to suppress the state where the characteristics of any spatial channel are good while the characteristics of another spatial channel are inferior.

[Configuration example (the first example) of a transmitted beam forming unit]

Fig. 4 illustrates a detailed example of a transmitted beam forming unit 23. Here, in the same manner as the above-described example, the transmitted beam matrix U(jω) is expressed by Equation (24).
$$U(j\omega) = \begin{pmatrix} 1+e^{-j\omega} & 1-e^{-j\omega} \\ 1-e^{-j\omega} & 1+e^{-j\omega} \end{pmatrix} \quad \ldots (24)$$

Here, the multiplicity L becomes L = M = N = 2. The transmitted beam matrix is constructed such that weights of the power and the phase of the respective transmitted sub-streams in the respective antenna elements 2a and 2b are varied depending on the frequencies.
In this embodiment, the transmitted beam forming unit 23 performs the processing after the IFFT, and thus the transmitted beam forming unit 23 performs the transmitted beam forming process on the transmitted sub-streams $s_1(j\omega)$ and $s_2(j\omega)$ in the time domain.
Considering the transmitted beam forming process in the frequency domain, X(jω) = U(jω)S(jω), where the transmitted signal s(jω) is multiplied by the transmitted beam matrix U(jω) that is the function matrix of the frequencies, is a complicated operation.
On the other hand, in this embodiment, the transmitted beam forming process is performed in the time domain, and thus even if the transmitted beam matrix U is a function matrix of the frequencies, the transmitted beam forming unit 23 can be simply configured by a delay processor 41 and an addition unit 42 (see Fig. 4).
Also, in Fig. 4, the term "$Z^{-1}$" is $e^{-j\omega}$, and a delay process of delay time = 1 is performed. Also, the operation of the addition unit 42 includes subtraction because the subtraction is an addition of a negative value.

[Desirable condition of transmitted beam matrix U(jω)]

It is sufficient if the transmitted beam matrix U(jω) is a function of frequencies in order to achieve only the randomization of the MIMO channels. However, it is advantageous that any one, the plurality, or all of the following conditions 1 to 3 can be satisfied.

(Condition 1)

When the transmitted beam matrix U(jω) of a matrix size M × L is expressed as transmitted beam vectors $u_1(j\omega)$, ..., $u_L(j\omega)$ that correspond to transmitted sub-streams $s_1(j\omega)$, ..., $s_L(j\omega)$ by Equation (25),
**[0092]**

$$U(j\omega) = \begin{bmatrix} u_{11}(j\omega) & \cdots & u_{1L}(j\omega) \\ \vdots & \ddots & \vdots \\ u_{M1}(j\omega) & \cdots & u_{ML}(j\omega) \end{bmatrix} \quad (M \times L)$$

$$U(j\omega) = [\; u_1(j\omega) \;\; \cdots \;\; u_L(j\omega) \;] \qquad \text{... (25)}$$

Condition 1 is to satisfy following Equation (26).
Condition 1:

$$U_l(j\omega)^H u_l(j\omega) = \text{constant } (l = 1, ..., L, \text{ for arbitrary } \omega) \qquad \text{....(26)}$$

Here, the superscript H indicates complex conjugate transpose.
The condition 1 is a condition for equally dividing the transmitted power for the respective transmitted sub-streams $s_1(j\omega)$, ..., $s_L(j\omega)$. By satisfying this condition, it is possible to prevent the occurrence of bias in the spatial channel characteristics of the respective transmitted sub-streams $s_1(j\omega)$, ..., $s_L(j\omega)$.

(Condition 2)

As described above, when the transmitted beam matrix U(jω) of a matrix size M×L is expressed by transmitted beam vectors $u_1(j\omega)$, ..., $u_L(j\omega)$ that correspond to transmitted sub-streams $s_1(j\omega)$, ..., $s_L(j\omega)$, the condition 2 is to satisfy following Equation (27).
Condition 2:

$$U_l(j\omega)^H u_{l'}(j\omega) = 0 \; (\, l = (1, ..., L), \; l' = (1, ..., L), \; l \neq l', \text{ for any } \omega) \qquad \text{....(27)}$$

The condition 2 is an orthogonal condition. By satisfying this condition, it is possible to prevent the occurrence of interference between the respective transmitted sub-streams $s_1(j\omega)$, ..., $s_L(j\omega)$.

(Condition 3)

As described above, when the transmitted beam matrix U(jω) of a matrix size M×L is expressed by weight vectors $u'_1(j\omega)$, ..., $u'_M(j\omega)$ of transmitted sub-streams $x_1(j\omega)$, ..., $s_M(j\omega)$ in M transmission antenna elements by Equation

(28),
**[0100]**

$$U(j\omega)=\begin{bmatrix} u_{11}(j\omega) & \cdots & u_{1L}(j\omega) \\ \vdots & \ddots & \vdots \\ u_{M1}(j\omega) & \cdots & u_{ML}(j\omega) \end{bmatrix} \quad U(j\omega)=\begin{bmatrix} u'_1(j\omega) \\ \vdots \\ u'_M(j\omega) \end{bmatrix} \quad \ldots (28)$$

Condition 3 is to meet following Equation (29).
$$U'_m(j\omega)^H u'_m(j\omega) = \text{constant } (m = 1, ..., M, \text{ for any } \omega) \quad \ldots.(29)$$

Here, the superscript H indicates complex conjugate transpose.
Also, if the transmitted beam matrix U(jω) is a square matrix (M = L), it is advantageous that the transmitted beam matrix U(jω) is a unitary matrix.
Here, in the case of the transmitted beam matrix U(jω) (matrix size = 2 × 2) that corresponds to the transmitted beam forming unit 23 as shown in Fig. 4, the conditions 1 to 3 are satisfied as expressed in Equation (30).
$$\text{Condition 1: } U_l(j\omega)^H u_l(j\omega) = 4 \ (l = 1, ..., L, \text{ for any } \omega)$$

$$\text{Condition 2: } U_l(j\omega)^H u_{l'}(j\omega) = 0 \ (l = (1, ..., L), l' = (1, ..., L), l \neq l', \text{ for any } \omega)$$

$$\text{Condition 3: } U'_m(j\omega)^H u'_m(j\omega) = 4 \ (m = 1, ..., M, \text{ for any } \omega) \quad \ldots.(30)$$

[Configuration example (the second example) of a transmitted beam forming unit]

Fig. 5 illustrates another detailed example of a transmitted beam forming unit 23. Here, the matrix size of the transmitted beam matrix U(jω) is 3×2. That is, the multiplicity L of the transmitted signal is L = 2, and the number M of transmitted antenna elements is M = 3.
Here, the transmitted beam matrix U(jω) is expressed by following Equation (31). The transmitted beam matrix is also constructed such that weights of the power and the phase of the respective transmitted sub-streams in the respective antenna elements 2a, 2b, and 2c are varied depending on the frequencies.
$$U(j\omega)=\begin{pmatrix} 1+e^{-j\omega} & 1-e^{-j\omega} \\ 1+e^{-j\left(\omega+\frac{2\pi}{3}\right)} & 1-e^{-j\left(\omega+\frac{2\pi}{3}\right)} \\ 1+e^{-j\left(\omega+\frac{4\pi}{3}\right)} & 1-e^{-j\left(\omega+\frac{4\pi}{3}\right)} \end{pmatrix} \quad \ldots (31)$$

The transmitted beam forming unit 23 shown in Fig. 5 can also be simply configured by the delay processor 41 and the addition unit 42 in the same manner.
In the case of the transmitted beam matrix U(jω) (matrix size = 3 × 2), the above-described conditions 1 to 3 are satisfied as expressed in Equation (32).

$$\text{Condition 1: } U_l(j\omega)^H u_l(j\omega) = 6 \ (l = 1, ..., L, \text{ for any } \omega)$$

$$\text{Condition 2: } U_l(j\omega)^H u_{l'}(j\omega) = 0 \ (l = (1, ..., L), l' = (1, ..., L), l \neq l', \text{ for any } \omega)$$

$$\text{Condition 3: } U'_m(j\omega)^H u'_m(j\omega) = 4 \ (m = 1, ..., M, \text{ for any } \omega) \quad ....(32)$$

[Configuration example (the third example) of a transmitted beam forming unit]

Fig. 6 illustrates still another detailed example of a transmitted beam forming unit 23. Here, the matrix size of the transmitted beam matrix U(jω) is 4 × 2. That is, the multiplicity L of the transmitted signal is L = 2, and the number M of transmitted antenna elements is M = 4.
Here, the transmitted beam matrix U(jω) is expressed by following Equation (33). The transmitted beam matrix is also constructed such that weights of the power and the phase of the respective transmitted sub-streams in the respective antenna elements 2a, 2b, 2c, and 2d are varied depending on the frequencies.
$$U(j\omega) = \begin{bmatrix} 1+e^{-j\omega} & 1-e^{-j\omega} \\ e^{-j\omega}+e^{-j2\omega} & e^{-j\omega}-e^{-j2\omega} \\ 1-e^{-j\omega} & 1-e^{-j\omega} \\ e^{-j\omega}-e^{-j2\omega} & e^{-j\omega}-e^{-j2\omega} \end{bmatrix} \quad ... (33)$$

The transmitted beam forming unit 23 shown in Fig. 6 can also be simply configured by the delay processor 41 and the addition unit 42.
In the case of the transmitted beam matrix U(jω) (matrix size = 4 × 2), the above-described conditions 1 to 3 are satisfied as expressed in Equation (34).
$$\text{Condition 1: } U_l(j\omega)^H u_l(j\omega) = 8 \ (l = 1, ..., L, \text{ for any } \omega)$$

$$\text{Condition 2: } U_l(j\omega)^H u_{l'}(j\omega)=0 \ (l=(1, ..., L), l'=(1, ..., L), l \neq l', \text{ for any } \omega)$$

$$\text{Condition 3: } U'_m(j\omega)^H u'_m(j\omega)=4 \ (m=1, ..., M, \text{ for any } \omega) \quad ....(34)$$

[Regarding the delay processor]

Since the delay process of the delay processor 41 may be a temporally delayed according to a delay amount T, the delay processor 41 can be configured by a buffer for delaying output of a signal as large as the delay amount T.
Here, as shown in Fig. 7A, assuming a data symbol in the time domain in which the delay amount is "0" is s (t), the data symbol having the delay amount T $s(t - T) = s(t) \times e^{-j\omega T}$ is as shown in Fig. 7B. In the case of a simple delay for delaying as large as the delay amount T, it is sufficient if the delay processor 41 has a buffer having a capacity as large as the delay amount T, and thus a relatively small buffer size is sufficient.
However, in the case of a delay as shown in Fig. 7B, the transmission start timing of the data symbol is delayed as large as T from a time point t1, and thus the transmission end timing of the data symbol is also delayed as large as T from a time point t2. Since only waveforms in a period of t1 to t2 can be used for demodulation of the date symbol s(t) on the receiving side, the waveforms after t2 are unable to be used for demodulation. Also, the waveforms after t2 may interfere

with the next data symbol.

Accordingly, by performing circulation delay as shown in Fig. 7C, rather than the simple delay as described above, the transmission start timing of the data symbol becomes the same as that illustrated in Fig. 7A to eliminate the delay, and the respective sub-carriers can be phase-rotated as shown in Fig. 7B in the same manner.

As shown in Fig. 7B, the circulation delay is performed by adding the range of last T[s] among delayed data symbols to the leading data symbol. Accordingly, the whole circulation-delayed data symbol can be used for the demodulation, and the interference with the next date symbol can be prevented.

At this time, in the case of performing the circulation delay, it is necessary to enlarge the buffer size as compared with the delay illustrated in Fig. 7B.

[Regarding randomization in temporal direction of the transmitted beam]

Fig. 8 illustrates another example of a transmitted beam forming unit 23. This transmitted beam forming unit 23 is provided with a means for changing the transmitted beam matrix U(jω). That is, by changing the construction of the transmitted beam matrix U(jω), for example, according to time, the effect of randomization can be enhanced. In Fig. 8, a delay control unit 43 for changing the delay amount in the delay processor 41 is illustrated as a means for changing the transmitted beam matrix U(jω). In this case, as the means for changing the transmitted beam matrix U(jω), a plurality of transmitted beam forming units 23 that correspond to a plurality of transmitted beam matrices U(jω) which are different from one another may be prepared and any one transmitted beam forming unit 23 may be selected for the transmission.

Also, the construction of the transmitted beam matrix U(jω) may not be varied depending on time. For example, in the case of retransmitting the data symbols, the diversity can be obtained by making the transmitted beam matrix U (jω) different from that during the initial transmission.

[Regarding report to the receiving side of transmitted beam matrix (transmitted beam pattern)]

On the receiving side 3, the transmitted signal can be estimated since H(jω)U(jω) is known although the transmitted beam pattern U(jω) is not known.

For example, if both the transmitting and receiving sides transmit known pilot signals ($s_1$, $s_2$) = (1, 0) and ($s_1$, $s_2$) = (0, 1) in different timings in a state where there are two transmission antennas and two transmitted sub-streams ($s_1$, $s_2$), the receiving side can recognize H(jω)U(jω) that is varied depending on the transmitted beam U(jω) and the transmission path characteristic H(jω).

The receiving side can estimate the transmitted signal by applying the H(jω)U(jω) that is known as above to the received data signal.

However, the transmitting side 2 may report the transmitted beam pattern U(jω) to the receiving side 3. In this case, the receiving side 3 can obtain the transmission path characteristic H (= $HU \times U^{-1}$) from the respective antenna elements 2a and 2b of a transmission source to the respective antenna elements 3a and 3b of the receiving side 3. The obtained transmission path characteristic H may be used to calculate a delay profile of a transmission path environment or an angle spread of the antennas.

[Second embodiment]

Figs. 9 to 11 illustrate a second embodiment of the present invention. In the second embodiment, in the case where the radio communication device 2 on the transmitting side estimates the transmission path characteristic H from the transmission antennas 2a and 2b to the reception antennas 3a and 3b, if the reliability of the estimated value is low, the transmitted beam forming is performed by the transmitted beam matrix that is the function of the frequencies. Meanwhile, if the reliability of the estimated value is high, an optimum transmitted beam formation is formed according to the estimated value of the transmission path characteristic. In the second embodiment, specially unexplained points are the same as those in Figs. 1 to 8.

As illustrated in Fig. 9, the transmitting side radio communication device (for example, a base station device that communicates with a mobile terminal) 2 is provided with a transmission path characteristic estimation unit 27 that estimates the transmission characteristic based on the received signal (received pilot signal).

Also, the radio communication device 2 is provided with a reliability determination unit 28 which determines whether information on the transmission path characteristic estimated by the estimation unit 27 is reliable or not (correct or incorrect).

If the estimated transmission path characteristic is reliable, the transmitted beam forming unit 23 generates the transmitted beam matrix (which is not the function of the frequencies) according to the transmission path characteristic. In this case, since the transmitted beam matrix is generated based on the reliable accurate transmission path characteristic, an optimum beam forming can be performed.

On the other hand, if the estimated transmission path characteristic is not reliable, the transmitted beam forming unit 23 performs beam formation using the transmitted beam matrix that is the function of frequency above.
In the second embodiment, if the reliable estimated value of the transmission path characteristic is obtained, the optimum beam forming is performed. Meanwhile, if the transmission path characteristic is not reliable, the communication is performed without degrading the communication efficiency by using the "transmitted beam matrix that is the function of the frequencies" that does not require the transmission path characteristic.

Fig. 10 illustrates the reliability determination process of the estimated value of the transmission path characteristic by the reliability determination unit 28. In this reliability determination process, the estimated value of the transmission path characteristic is first acquired, and then the reliability (whether or not the estimated value is accurate) is determined in the elapsed time until the transmission timing of the signal (step S1).
As illustrated in Fig. 11, in a TDD (Time Division Duplex), a downlink DL that performs transmission from the base station device 2 to the terminal device 3 and an uplink UL that performs the transmission from the terminal device 3 to the base station device 2 are temporally alternately performed, the base station device 2 can estimate the transmission path characteristic in a period of the uplink UL in which the pilot signal can be received by the terminal device 3.
On the other hand, since the base station device 2 transmits a signal in the period of the downlink DL, a certain amount of time elapses until the transmission timing of the signal after the estimated value of the transmission path characteristic is acquired.

Accordingly, in the case where the mobile terminal move at high speed, in the transmission timing of the signal, there is a possibility that the estimated transmission path characteristic is actually changed greatly. As illustrated in Fig. 11, in the first half of the downlink sub-frame, the elapsed time from the transmission path characteristic estimation to the transmission timing is T1, which is relatively short. Meanwhile, in the latter half of the downlink, the elapsed time from the transmission path characteristic estimation to the transmission timing is T2, which is relatively long.
Also, if the estimated value of the transmission path characteristic is unable to be acquired in the next uplink UL, the elapsed time from the transmission path characteristic estimation to the transmission timing is T3, which is further long, in the following downlink DL.

Accordingly, in the determination of step 1, it is determined whether the elapsed time after the estimated value of the transmission path characteristic is acquired is equal to or shorter than a threshold value T. It is advantageous that the threshold value T is set to be in the middle of the time of the next downlink sub-frame based on the transmission path characteristic estimation timing in the previous uplink sub-frame. That is, it is advantageous that the threshold value T is set to the time between T1 and T2 as illustrated in Fig. 11.

In step S1, if the elapsed time exceeds T, it is determined that the estimated value of the transmission path characteristic is inaccurate (has a low reliability) (step S3). The transmitted beam forming unit 23 receives the result of determination that the estimated value of the transmission path characteristic is inaccurate, and performs the beam forming process by the transmitted beam matrix that is the function of the frequencies.

In step S1, if the elapsed time is equal to or shorter than T, it is determined again whether the correlation value of the transmission path characteristic is equal to or larger than the threshold value X (step S2).
In determination of step S2, the change amount of the transmission path characteristic per time is determined. If the corresponding change amount is large, it is determined that the estimated value of the transmission path characteristic is inaccurate (has a low reliability). That is, if the estimation timing of the transmission path (timing in middle of the uplink sub-frame) does not coincide with the transmission timing (timing in middle of the downlink sub-frame) and the transmission path characteristic is greatly changed by the time as an environment, it is determined that the estimated value of the transmission path characteristic is inaccurate and unreliable at the time point of the transmission timing.

For example, as illustrated in Fig. 11, it is assumed that the estimated values $h(t_n)$, $h(t_{n+1})$, and $h(t_{n+2})$ of the respective transmission path characteristics are acquired at different times $t_n$, $t_{n+1}$, and $t_{n+2}$, respectively. In step S2, correlation of the estimated values $h(t_n)$, $h(t_{n+1})$, and $h(t_{n+2})$ is acquired, and if the correlation value is small, it may be determined that the change of the transmission path is great.

In this case, the correlation between the transmission path characteristics acquired for a predetermined number of times (N times) can be obtained by Equation (35).

Correlation between the transmission path characteristics:

$$\left| \sum_{n=1}^{N-1} h(t_n)\, h(t_{n+1})^H \right| \qquad \ldots (35)$$

Also, the correlation may be obtained by multiplying the correlation value by a weight $\alpha$ $(0 < \alpha < 1)$ as in Equation (36). It is advantageous that the weight $\alpha$ becomes larger with respect to new transmission path characteristics.

Correlation between the transmission path characteristics:

$$\left|\sum_{n=1}^{N-1} \alpha^{N-n} h(t_n) h(t_{n+1})^H\right| \quad \ldots (36)$$

In step S2, if the correlation of the estimated value of the transmission path characteristic is smaller than X, it is determined that the estimated value of the transmission path characteristic is inaccurate (has a low reliability) (step S3). Even in this case, the transmitted beam forming unit 23 receives the result of determination that the estimated value of the transmission path characteristic is inaccurate, and performs the beam forming process by the transmitted beam matrix that is the function of the frequencies.

In step S2, if the correlation of the estimated value of the transmission path characteristic is equal to or larger than X, it is determined that the estimated value of the transmission path characteristic is accurate (has a high reliability) (step S4).

In this case, the transmitted beam forming unit 23 generates an optimum transmitted beam matrix according to the transmission path characteristic, rather than the transmitted beam matrix that is the function of the frequencies, and performs a beam forming process by the corresponding transmitted beam matrix.

At this time, it is not necessary to perform both the determinations in steps S1 and S2 as described above, and either of the determinations may be performed. Also, as in step S2, the process of determining whether or not the change amount of the transmission path characteristic per time is large is not limited to the described-above step. For example, a means for measuring the moving speed of the mobile terminal 3, multipath, characteristic difference between transmission and reception antennas, temporal change of antenna characteristics may be provided, and the determination may be performed according to the result of such measurements.

The embodiments as described above are exemplary in all aspects and should not be limited thereto. The scope of the invention is shown in the claims, rather than the above-described meanings, and it is intended that all modifications are possible within the meanings and scope that are equivalent to the claims.

This application is based on Japanese Patent Application No. 2008-166521, filed on June 25, 2008, the contents of which are incorporated herein by reference.

## EXPLANATION OF REFERENCE

| | |
|---|---|
| 1: | MIMO RADIO COMMUNICATION SYSTEM |
| 2: | RADIO COMMUNICATION DEVICE (TRANSMITTING SIDE) |
| 2a, 2b: | TRANSMITTED ANTENNA ELEMENT |
| 3: | RADIO COMMUNICATION DEVICE (RECEIVING SIDE) |
| 3a, 3b: | RECEIVED ANTENNA ELEMENT |
| 4: | TRANSMISSION PATH |
| 20: | PROCESSOR |
| 21: | MAP PROCESSOR |
| 22a, 22b: | IFFT UNIT |
| 23: | TRANSMITTED BEAM FORMING UNIT |
| 24a, 24b: | CP UNIT |
| 25a, 25b: | D/A CONVERTER |
| 27: | TRANSMISSION PATH CHARACTERISTIC ESTIMATION UNIT |
| 28: | RELIABILITY DETERMINATION UNIT |
| 32: | WEIGHT PROCESSOR |

## Claims

**1.** A radio communication device that performs communication using a plurality of frequencies, the apparatus comprising:

a plurality of antenna elements; and
a processor that performs a transmitted beam forming process on a transmitted signal using a transmitted beam matrix;
wherein the transmitted beam matrix is constructed by a function matrix of the frequencies.

2. The radio communication device according to claim **1,** wherein the processor performs the transmitted beam forming process using the transmitted beam matrix on the transmitted signal in a time domain.

3. The radio communication device according to claim **1** or **2,** wherein the processor transforms the transmitted signal in a frequency domain into the transmitted signal in the time domain, and performs the transmitted beam forming process using the transmitted beam matrix on the transmitted signal transformed into the time domain.

4. The radio communication device according to claim **2** or **3,** wherein the processor performs the transmitted beam forming process using the transmitted beam matrix, by using a delay process in the time domain and an addition process in the time domain.

5. The radio communication device according to any one of claims **1** to **4,** wherein the transmitted beam matrix is constructed such that weights of powers and phases of respective transmitted sub-streams in the respective antenna elements are varied depending on frequencies.

6. The radio communication device according to any one of claims **1** to **5,** wherein the processor performs the transmitted beam forming process using the transmitted beam matrix, when it is determined that the reliability of estimated values of transmission path characteristics is low.

7. The radio communication device according to any one of claims **1** to **5,** wherein when a spatial multiplicity of the transmitted signal is L, the number of antenna elements is M, and an angular frequency is ω, the transmitted beam matrix U(jω) is given by the following Equation (1),

$$U(j\omega)=\begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \ (M\times L) \quad \ldots.(1)$$

wherein when transmitted beam vectors $u_1(j\omega)$ to $u_L(j\omega)$ correspond to respective transmitted sub-streams $s_1(j\omega)$ to $s_L(j\omega)$ in the transmitted signal having the multiplicity L, the transmitted beam matrix U(jω) is given by the following Equation (2),

$$U(j\omega) = [u_l(j\omega)\ldots\ u_L(j\omega)] \quad \ldots (2)$$

wherein the transmitted beam matrix U(jω) satisfies the following Equation (3) in any frequency ω,

$$U_l(j\omega)^H u_l(j\omega) = \text{constant}\ (l = 1, \ldots, L) \quad \ldots (3),$$

where the superscript H indicates complex conjugate transpose.

8. The radio communication device according to any one of claims **1** to **6,** wherein when a spatial multiplicity of the transmitted signal is L, the number of antenna elements is M, and an angular frequency is ω, the transmitted beam matrix U(jω) is given by Equation (4),

$$U(j\omega)=\begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \quad (M \times L) \qquad \ldots.(4)$$

wherein when transmitted beam vectors $u_1(j\omega)$ to $u_L(j\omega)$ correspond to respective transmitted sub-streams $s_1(j\omega)$ to $s_L(j\omega)$ in the transmitted signal having the multiplicity L', the transmitted beam matrix $U(j\omega)$ is given by Equation (5),

$$U(j\omega) = [u_l(j\omega) \ldots u_L(j\omega)] \qquad \ldots (5)$$

wherein the transmitted beam matrix $U(j\omega)$ satisfies the following Equation (6) in any frequency $\omega$,

$$U_l(j\omega)^H u_{l'}(j\omega) = 0 \; (l = (1, \ldots, L), l' = (1, \ldots, L), l \neq l') \qquad \ldots (6)$$

where the superscript H indicates complex conjugate transpose.

**9.** The radio communication device according to any one of claims **1** to **7,** wherein when a spatial multiplicity of the transmitted signal is L, the number of antenna elements is M, and an angular frequency is $\omega$, in the case where the transmitted beam matrix $U(j\omega)$ is given by Equation (7),

$$U(j\omega)=\begin{bmatrix} u_{11}(j\omega) & \cdots\cdots & u_{1L}(j\omega) \\ \vdots & \ddots & \vdots \\ u_{M1}(j\omega) & \cdots\cdots & u_{ML}(j\omega) \end{bmatrix} \quad (M \times L) \qquad \ldots (7)$$

wherein using weight vectors $u'_1(j\omega)$ to $U'_M(j\omega)$ of respective transmitted sub-streams $_{x1}(j\omega)$ to $s_M(j\omega)$ in MIMO antenna elements, the transmitted beam matrix $U(j\omega)$ is given by Equation (8),

$$U(j\omega)=\begin{bmatrix} u'_1(j\omega) \\ \vdots \\ u'_M(j\omega) \end{bmatrix} \qquad \ldots (8)$$

wherein the transmitted beam matrix $U(j\omega)$ satisfies the following Equation (9) in any frequency $\omega$,

$$U'_m(j\omega)^H u'_m(j\omega) = \text{constant} \; (m = 1, \ldots, M) \qquad \ldots (9)$$

where the superscript H indicates complex conjugate transpose.

**10.** The radio communication device according to any one of claims **1** to **8,** wherein the transmitted beam matrix is variable depending on time.

**11.** The radio communication device according to any one of claims **1** to **9,** wherein the processor transmits a pilot signal using the transmitted beam matrix.

**12.** A signal transmission method in a radio communication using a plurality of frequencies, the method comprising:

performing a transmitted beam formation such that transmitted beams are varied depending on frequencies, and spatial channel characteristics, viewed from a signal receiving side, are varied depending on frequencies.

FIG. 1

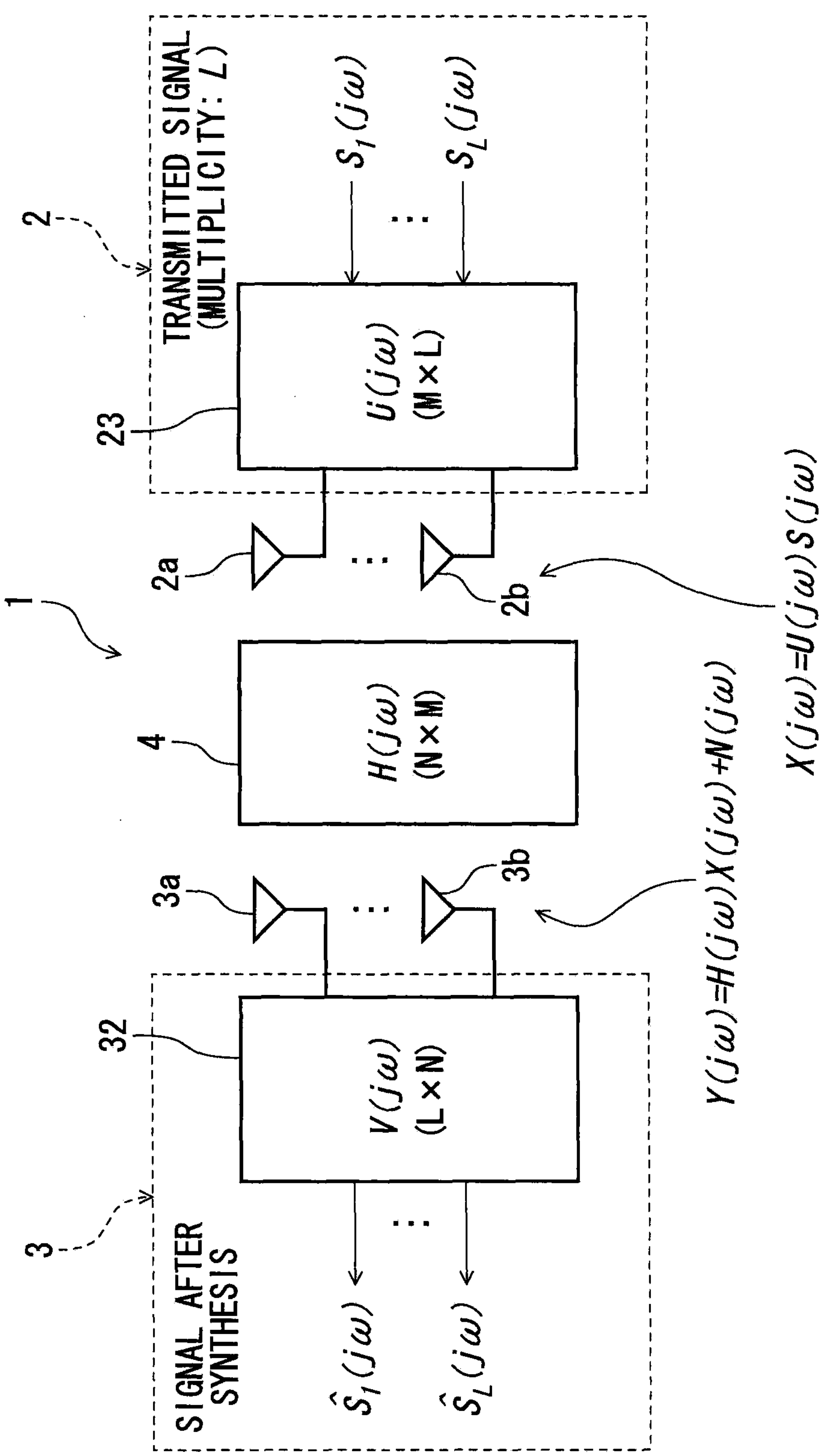
TRANSMITTED SIGNAL (MULTIPLICITY: L)
2
23
$U(j\omega)$ (M×L)
$S_1(j\omega)$
$S_L(j\omega)$
2a
2b
1
4
$H(j\omega)$ (N×M)
3a
3b
32
$V(j\omega)$ (L×N)
3
SIGNAL AFTER SYNTHESIS
$\hat{S}_1(j\omega)$
$\hat{S}_L(j\omega)$
$X(j\omega)=U(j\omega)S(j\omega)$
$Y(j\omega)=H(j\omega)X(j\omega)+N(j\omega)$

FIG. 2

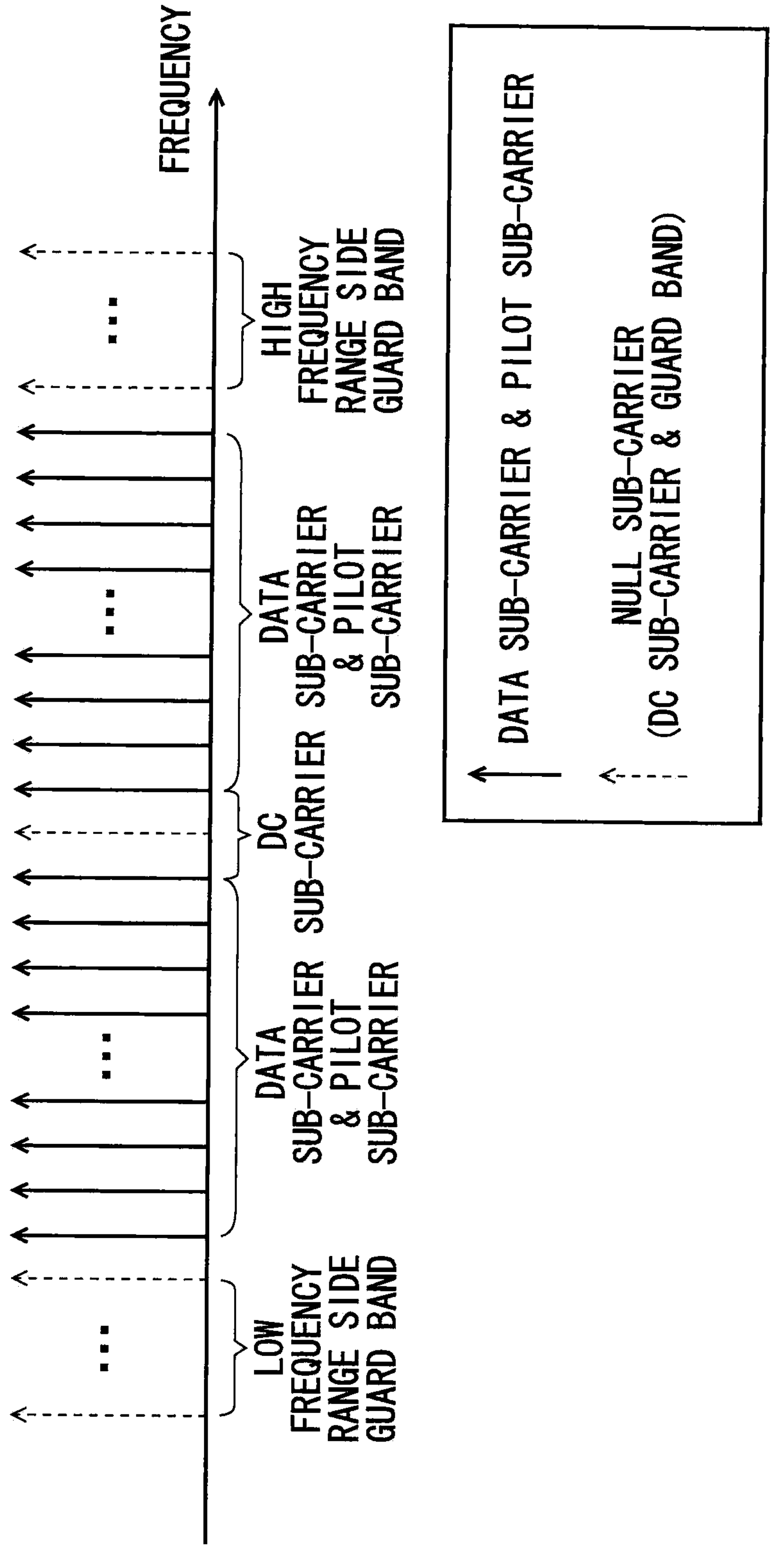
FREQUENCY
LOW FREQUENCY RANGE SIDE GUARD BAND
DATA SUB-CARRIER & PILOT SUB-CARRIER
DC SUB-CARRIER
DATA SUB-CARRIER & PILOT SUB-CARRIER
HIGH FREQUENCY RANGE SIDE GUARD BAND
DATA SUB-CARRIER & PILOT SUB-CARRIER
NULL SUB-CARRIER (DC SUB-CARRIER & GUARD BAND)

*FIG. 3*

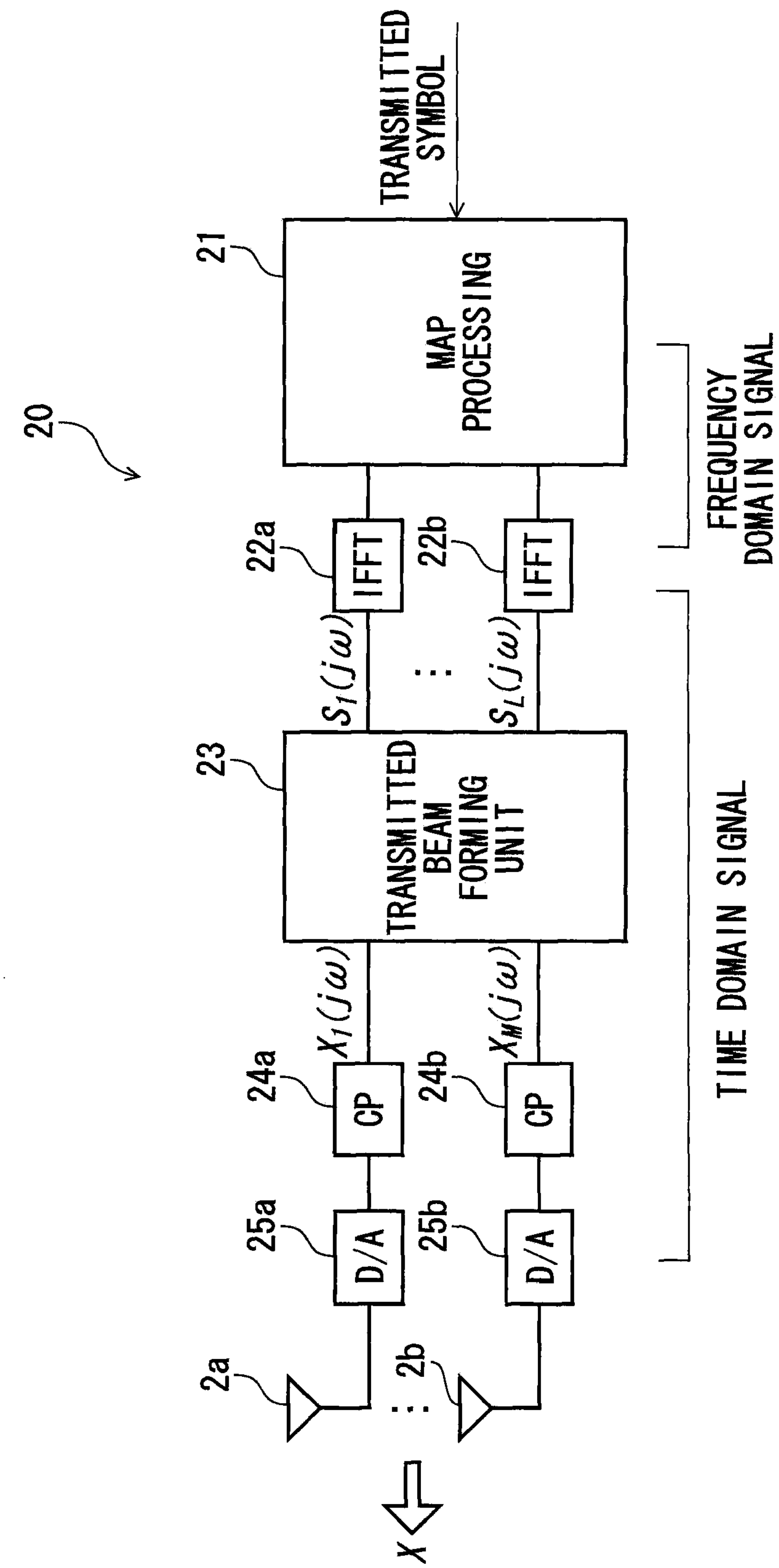
TRANSMITTED SYMBOL
20
21
MAP PROCESSING
22a
22b
IFFT
IFFT
$S_1(j\omega)$
$S_L(j\omega)$
23
TRANSMITTED BEAM FORMING UNIT
$X_1(j\omega)$
$X_M(j\omega)$
24a
24b
CP
CP
25a
25b
D/A
D/A
2a
2b
X
FREQUENCY DOMAIN SIGNAL
TIME DOMAIN SIGNAL

FIG. 4

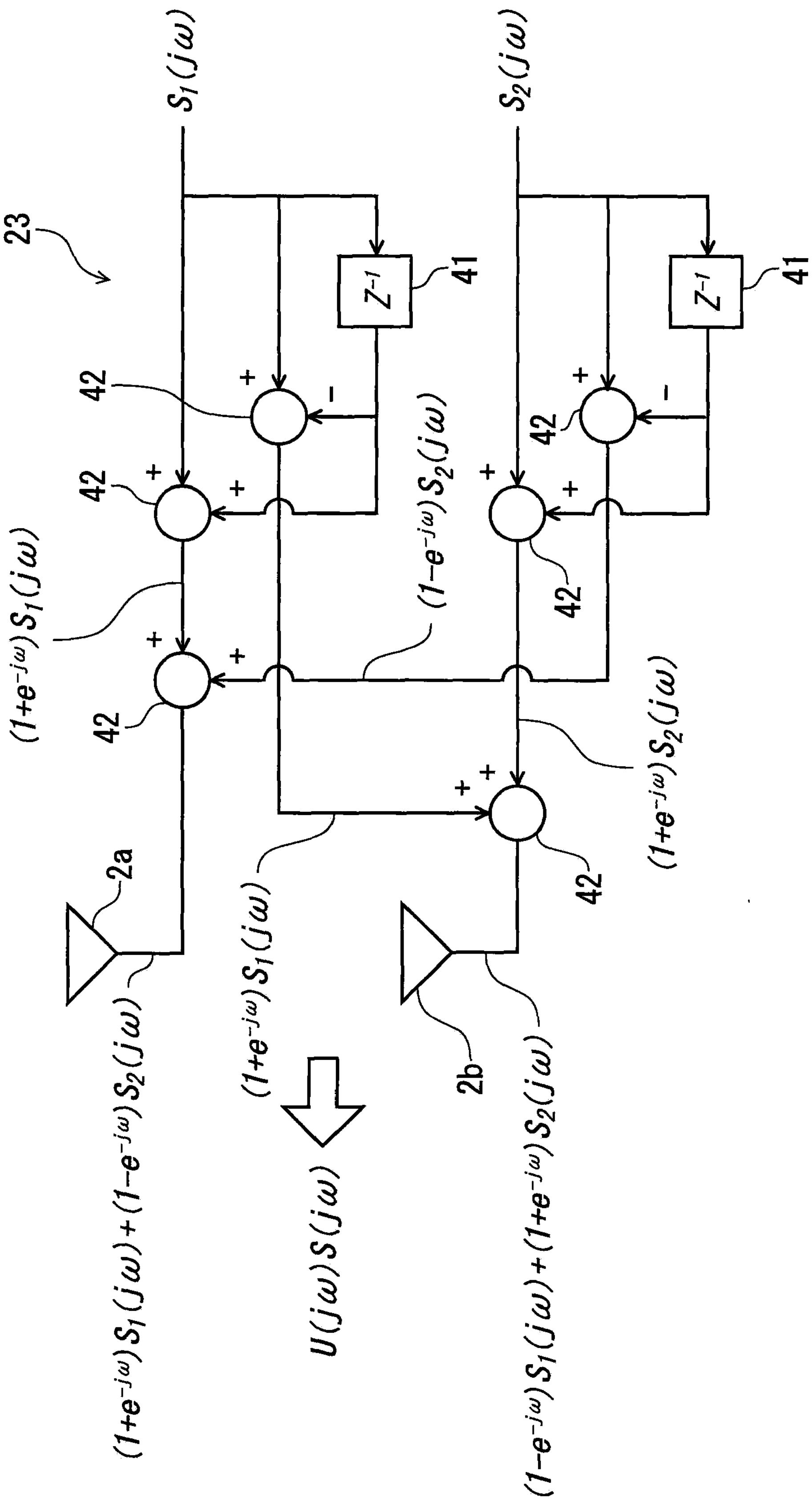
$S_1(j\omega)$
$S_2(j\omega)$
23
41
$Z^{-1}$
42
2a
2b
$(1+e^{-j\omega})S_1(j\omega)$
$(1-e^{-j\omega})S_2(j\omega)$
$(1+e^{-j\omega})S_2(j\omega)$
$(1+e^{-j\omega})S_1(j\omega)+(1-e^{-j\omega})S_2(j\omega)$
$U(j\omega)S(j\omega)$
$(1-e^{-j\omega})S_1(j\omega)+(1+e^{-j\omega})S_2(j\omega)$

*FIG. 5*

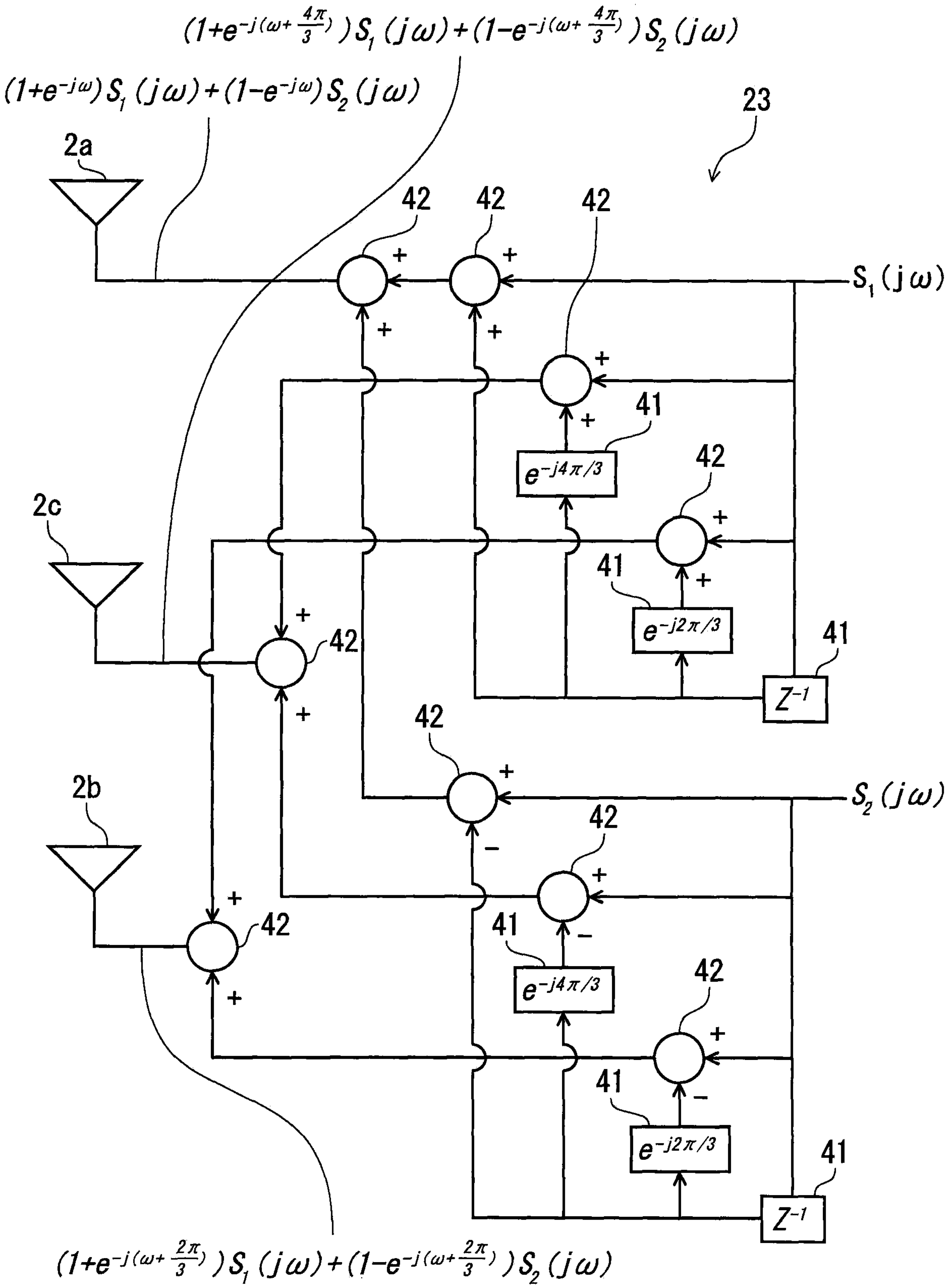

$(1+e^{-j(\omega+\frac{4\pi}{3})})S_1(j\omega)+(1-e^{-j(\omega+\frac{4\pi}{3})})S_2(j\omega)$
$(1+e^{-j\omega})S_1(j\omega)+(1-e^{-j\omega})S_2(j\omega)$
23
2a
42
42
42
$S_1(j\omega)$
41
$e^{-j4\pi/3}$
42
2c
41
$e^{-j2\pi/3}$
42
41
$Z^{-1}$
42
2b
$S_2(j\omega)$
42
42
41
$e^{-j4\pi/3}$
42
41
$e^{-j2\pi/3}$
41
$Z^{-1}$
$(1+e^{-j(\omega+\frac{2\pi}{3})})S_1(j\omega)+(1-e^{-j(\omega+\frac{2\pi}{3})})S_2(j\omega)$

FIG. 6

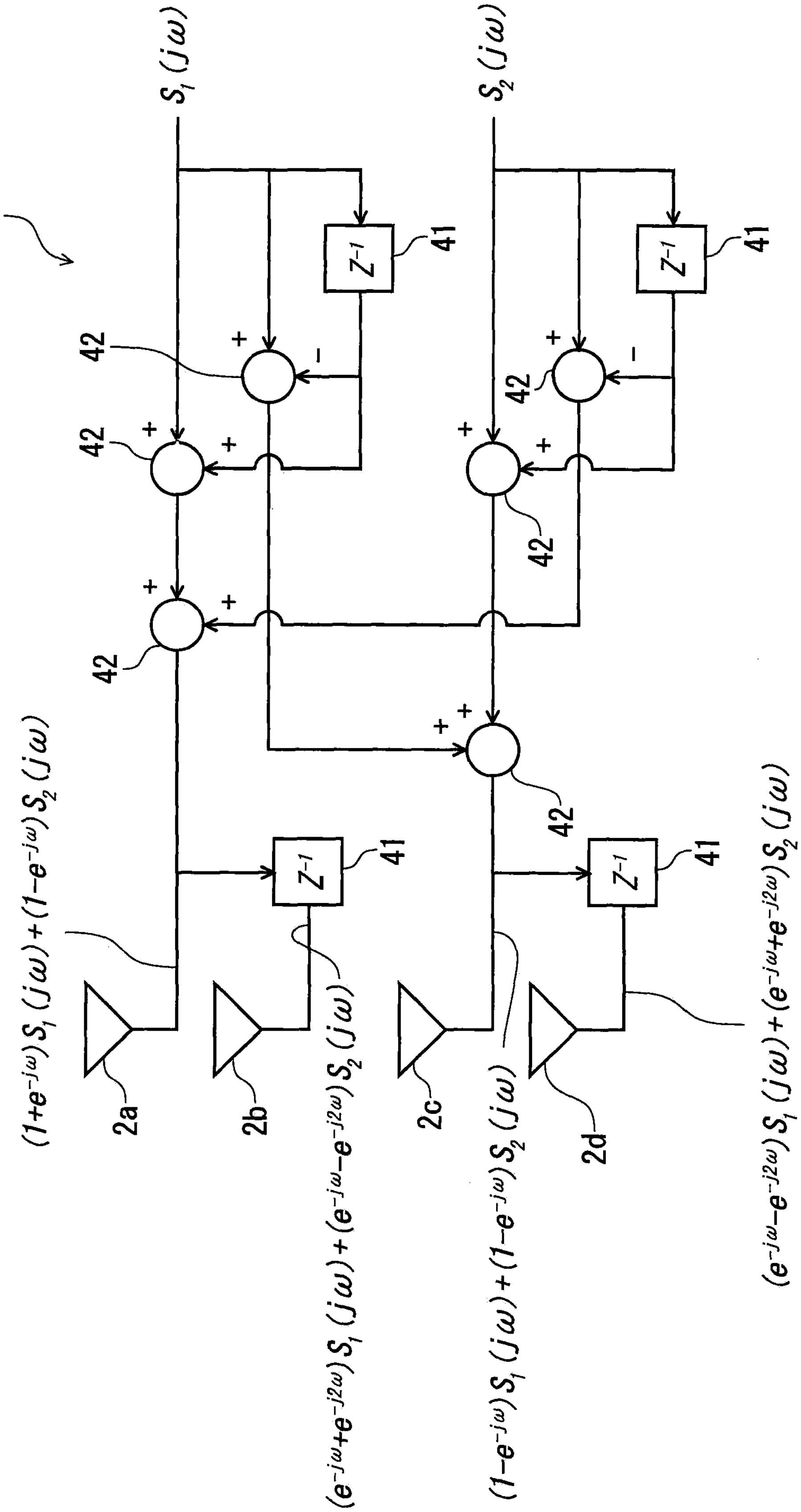

23
$S_1(j\omega)$
$S_2(j\omega)$
41
42
$Z^{-1}$
+
-
2a
2b
2c
2d
$(1+e^{-j\omega})S_1(j\omega)+(1-e^{-j\omega})S_2(j\omega)$
$(e^{-j\omega}+e^{-j2\omega})S_1(j\omega)+(e^{-j\omega}-e^{-j2\omega})S_2(j\omega)$
$(1-e^{-j\omega})S_1(j\omega)+(1-e^{-j\omega})S_2(j\omega)$
$(e^{-j\omega}-e^{-j2\omega})S_1(j\omega)+(e^{-j\omega}+e^{-j2\omega})S_2(j\omega)$

FIG. 7A

FIG. 7B

FIG. 7C

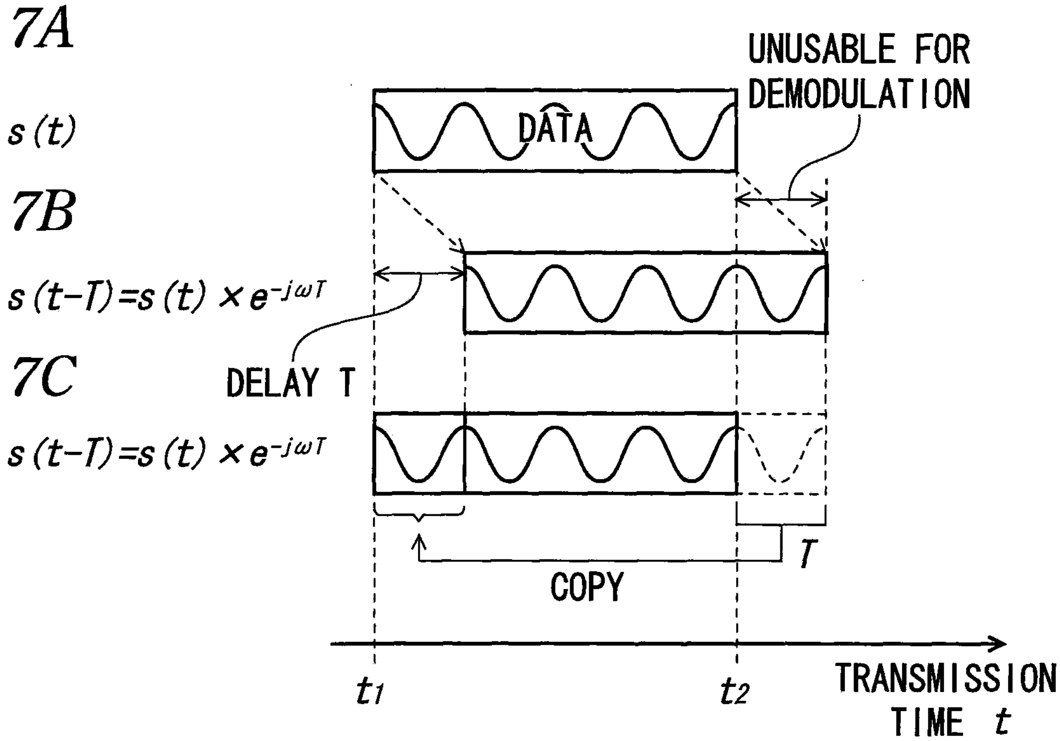

FIG. 8

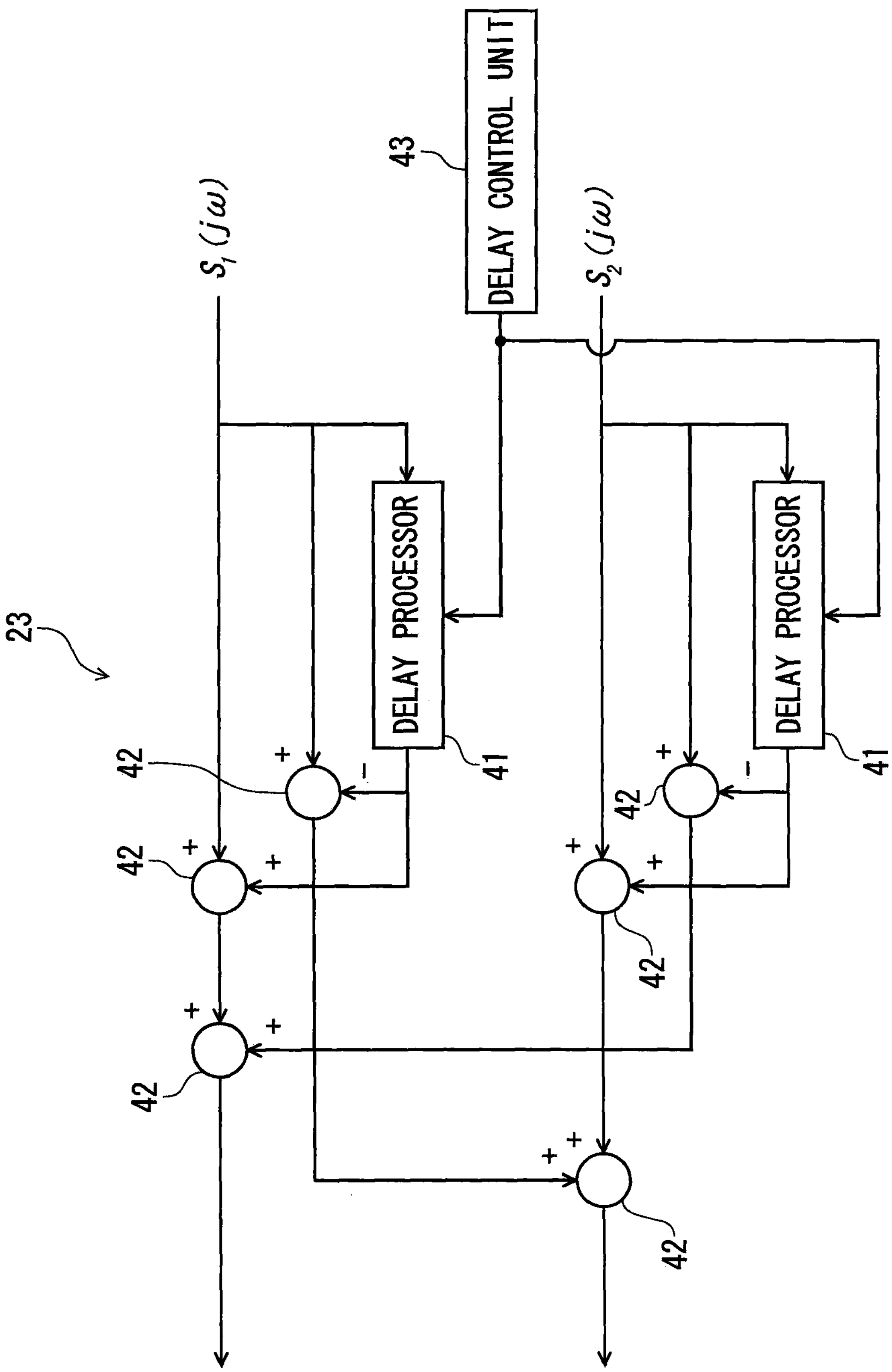
23
43
DELAY CONTROL UNIT
$S_1(j\omega)$
$S_2(j\omega)$
DELAY PROCESSOR
DELAY PROCESSOR
41
41
42
+
-

FIG. 9

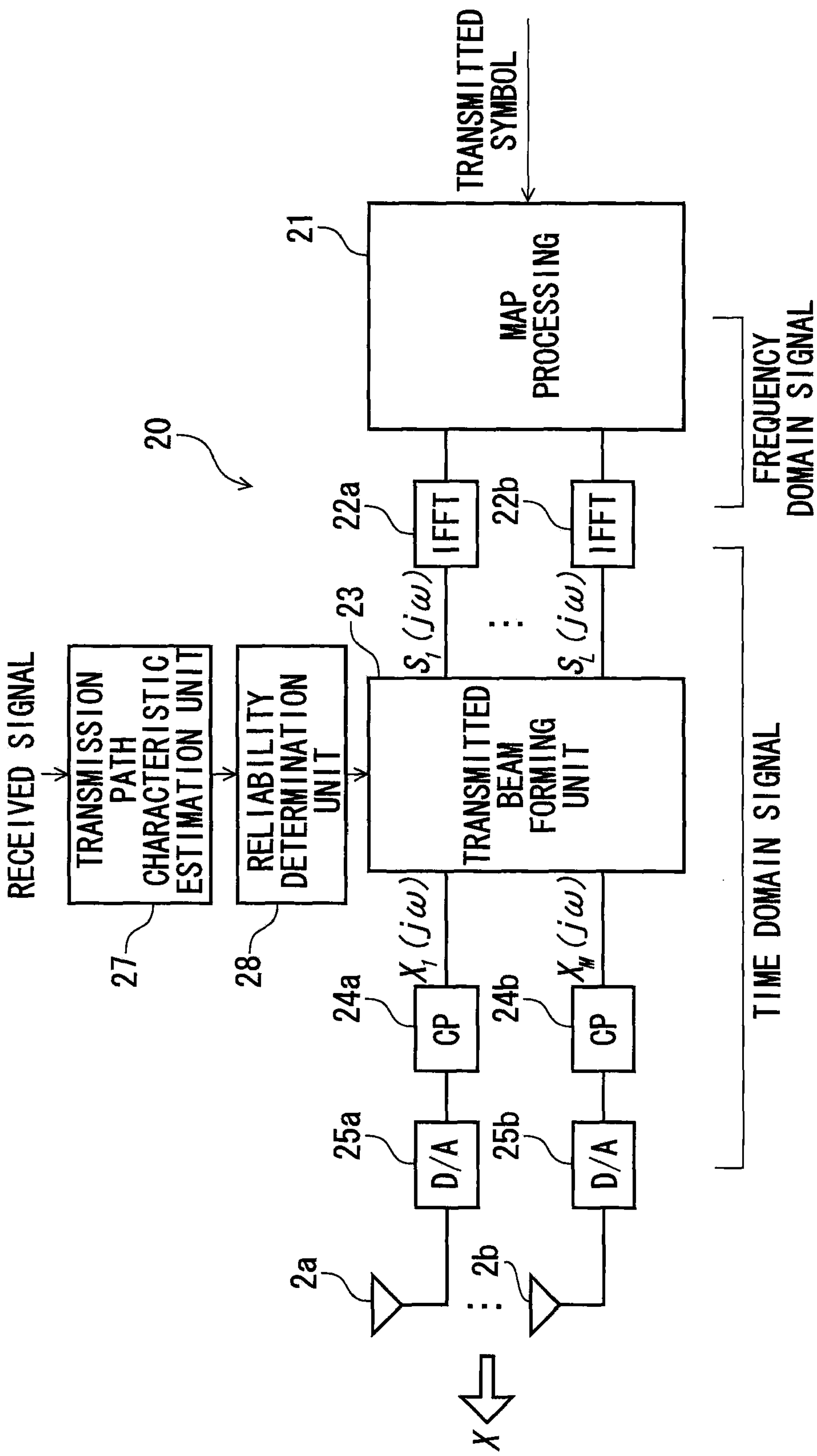
TRANSMITTED SYMBOL
21
MAP PROCESSING
20
22a
IFFT
22b
IFFT
FREQUENCY DOMAIN SIGNAL
23
$S_1(j\omega)$
$S_L(j\omega)$
RECEIVED SIGNAL
TRANSMISSION PATH CHARACTERISTIC ESTIMATION UNIT
RELIABILITY DETERMINATION UNIT
TRANSMITTED BEAM FORMING UNIT
27
28
$X_1(j\omega)$
$X_M(j\omega)$
24a
CP
24b
CP
TIME DOMAIN SIGNAL
25a
D/A
25b
D/A
2a
2b
X

*FIG. 10*

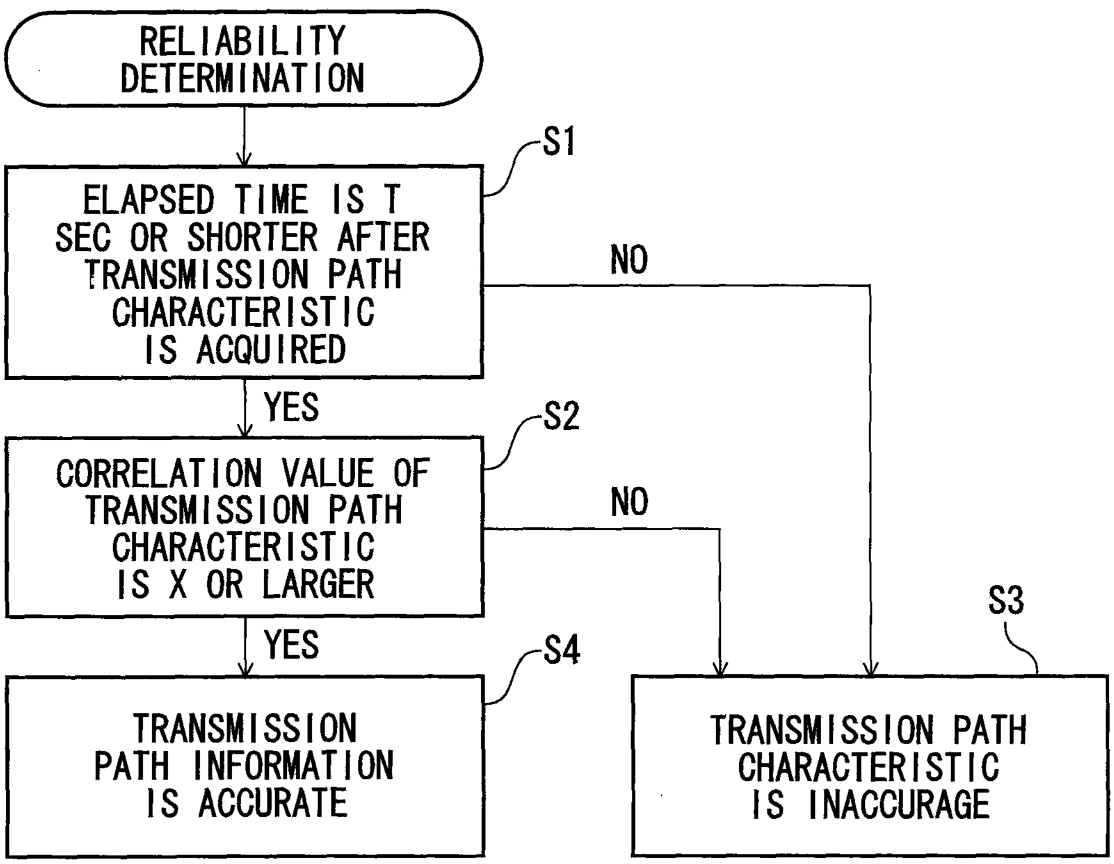
RELIABILITY DETERMINATION
S1
ELAPSED TIME IS T SEC OR SHORTER AFTER TRANSMISSION PATH CHARACTERISTIC IS ACQUIRED
NO
YES
S2
CORRELATION VALUE OF TRANSMISSION PATH CHARACTERISTIC IS X OR LARGER
NO
YES
S3
S4
TRANSMISSION PATH INFORMATION IS ACCURATE
TRANSMISSION PATH CHARACTERISTIC IS INACCURAGE

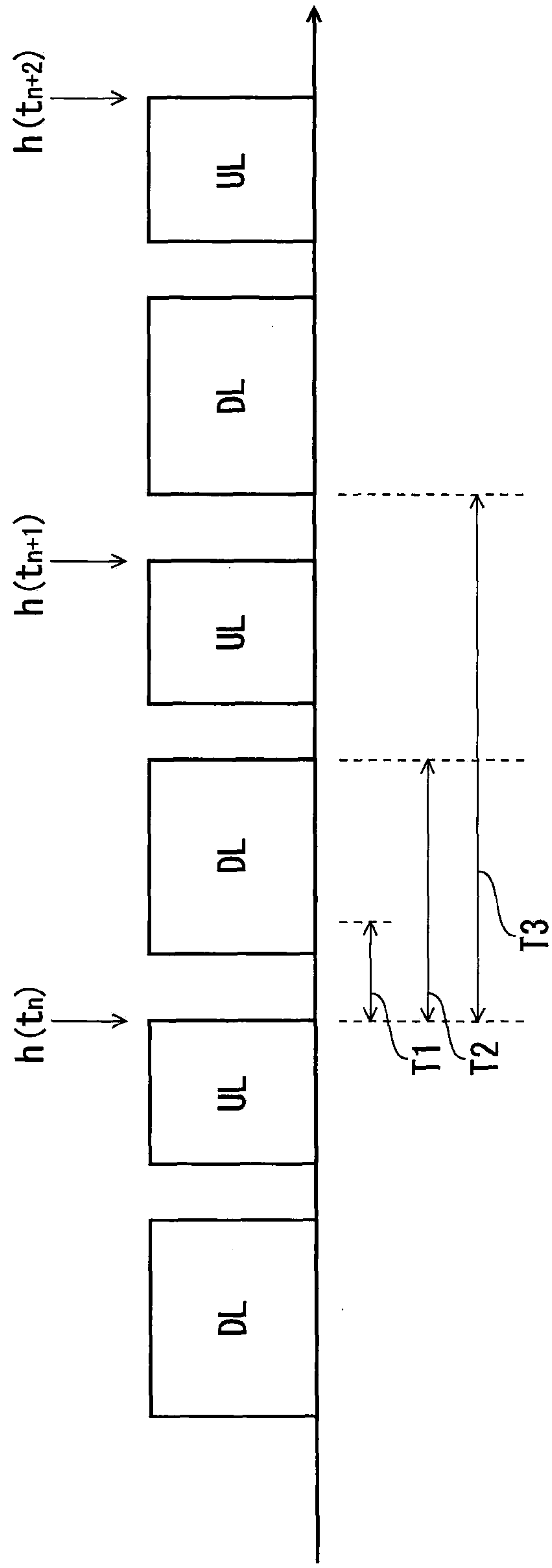


FIG. 11

FIG. 12

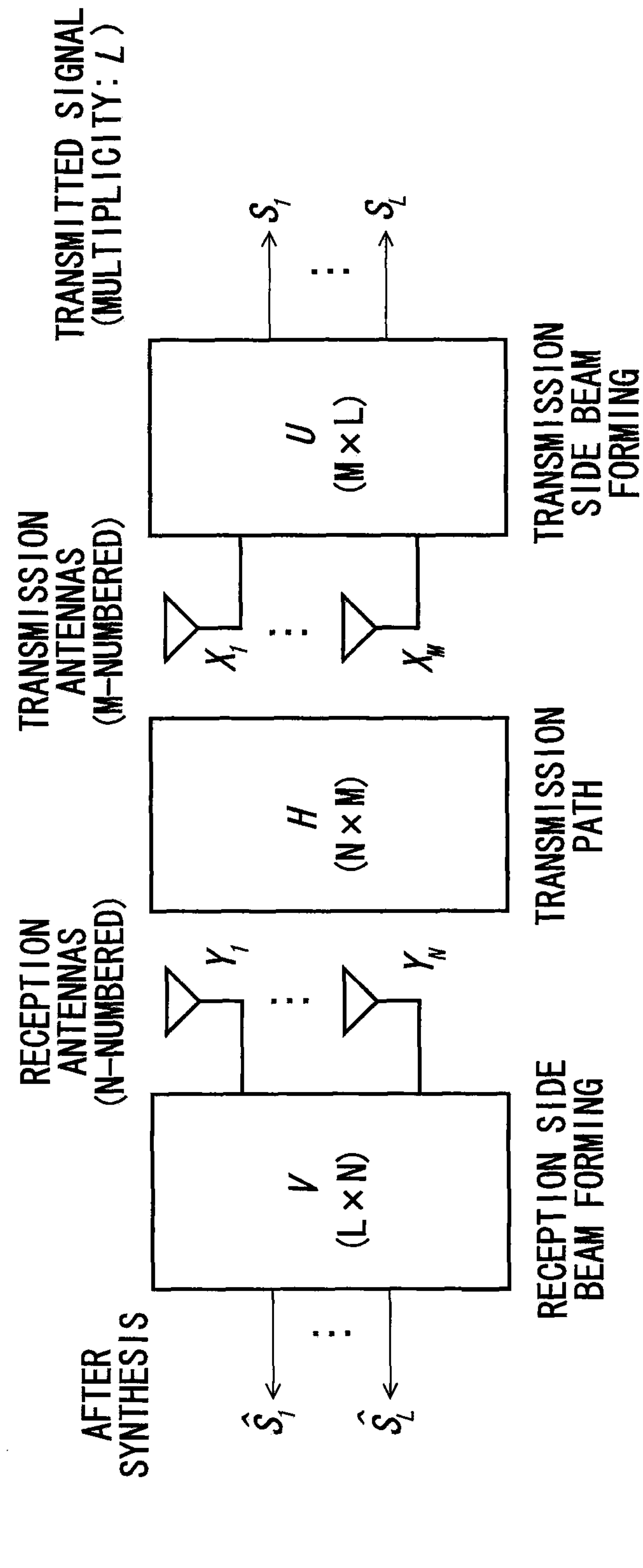
TRANSMITTED SIGNAL
(MULTIPLICITY: L)
TRANSMISSION
ANTENNAS
(M-NUMBERED)
RECEPTION
ANTENNAS
(N-NUMBERED)
AFTER
SYNTHESIS
U
(M×L)
H
(N×M)
V
(L×N)
TRANSMISSION
SIDE BEAM
FORMING
TRANSMISSION
PATH
RECEPTION SIDE
BEAM FORMING

## INTERNATIONAL SEARCH REPORT

International application No.
PCT/JP2009/061032

A. CLASSIFICATION OF SUBJECT MATTER
H04J99/00(2009.01)i, H04B7/04(2006.01)i, H04J11/00(2006.01)i, H04W16/28 (2009.01)i

According to International Patent Classification (IPC) or to both national classification and IPC

B. FIELDS SEARCHED

Minimum documentation searched (classification system followed by classification symbols)
H04J99/00, H04B7/04, H04J11/00, H04W16/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | US 2008/0080637 A1 (SAMUSUNG ELECTRONICS CO., LTD.),<br>03 April, 2008 (03.04.08),<br>Par. Nos. [0039] to [0048]; Figs. 2 to 4<br>& EP 1909407 A1 & WO 2008/041807 A1<br>& KR 10-2008-0030953 A | 1,5,7-9,12<br>2-4,6,10,11 |
| Y | JP 2008-512900 A (Qualcomm Inc.),<br>24 April, 2008 (24.04.08),<br>Par. No. [0015]; Fig. 3<br>& US 2006/0050770 A1 & US 2006/0067421 A1<br>& EP 1790089 A & EP 1790090 A<br>& WO 2006/029050 A2 & WO 2006/029042 A1<br>& CA 2579215 A & CN 101057417 A<br>& KR 10-2009-0036610 A | 2-4,6,10,11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>21 August, 2009 (21.08.09) | Date of mailing of the international search report<br>01 September, 2009 (01.09.09) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/061032

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-538424 A (Qualcomm Inc.),<br>27 December, 2007 (27.12.07),<br>Par. No. [0113]<br>& US 2005/0265275 A1 & US 2005/0249174 A1<br>& US 2008/0273617 A1 & EP 1747621 A<br>& EP 1747652 A & WO 2005/114868 A1<br>& WO 2005/114939 A1 & CA 2566330 A<br>& KR 10-2007-0011585 A & KR 10-2007-0012730 A<br>& CN 1981456 A | 6,10,11 |
| Y | WO 2007/52941 A1 (SAMUSUNG ELECTRONICS CO., LTD.),<br>10 May, 2007 (10.05.07),<br>Page 24, line 30 to page 27, line 18; Figs. 9, 10<br>& JP 2009-514323 A & US 2007/0104283 A1<br>& EP 1780925 A2 & KR 10-2007-0046680 A<br>& CN 101300749 A | 10,11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008166521 A

### Non-patent literature cited in the description

- High-speed IP wireless. **Hattori Takeshi ; Fujioka Masanobu.** Radio and Broadband Textbook. Impress R&D Ltd, 21 June 2006, 193